# EUROPEAN PATENT APPLICATION

(11) **EP 3 135 468 A1**
(43) Date of publication of application: **01.03.2017**
(21) Application number: 16185300.7
(22) Date of filing: 23.08.2016
(51) Int. Cl.: B29D 30/42, B29D 30/30, B60C 9/20

(54) **METHOF OF FORMING A TIRE PLY JOINT CONFIGURATION AND TIRE**

(30) Priority: 31.08.2015 US 201562212243 P
(71) Applicant: The Goodyear Tire & Rubber Company, Akron, Ohio 44316 (US)
(72) Inventor: CHEN, Hongbing, Broadview Heights, OH 44147 (US); HUNT, Nathan Andrew, Lewis Center, OH 43035 (US); BURG, Gary Robert, Massillon, OH 44646 (US); DELANEY, Nathan Andrew, North Canton, OH 44720 (US); KENDALL, Chad Everett, Wadsworth, OH 44281 (US)
(74) Representative: Kutsch, Bernd

(57) **Abstract**

A method of forming a layer of tire ply (5) comprising the steps: providing a first strip of ply (20) having a plurality of spaced reinforcement cords (22) with a spacing S and having a lateral end (21), wherein there is a distance X between the lateral end (21) of the first strip of ply (20) and the reinforcement cord (28) nearest the lateral end (21), wherein X is not equal to S; providing a second strip of ply (24) having a plurality of spaced reinforcement cords (25) having a spacing S' and having a lateral end (23), wherein there is a distance Y between the lateral end (23) of the second strip of ply (24) and the reinforcement cord (39) nearest the lateral end (23), wherein Y is not equal to the spacing S'; and joining the first strip of ply (20) and the second strip of ply (24) and/or the first and second lateral ends (21, 23).

## Description

### Field of the Invention

The invention relates to tire ply and a method of manufacturing ply and to a respective tire.

### Background of the Invention

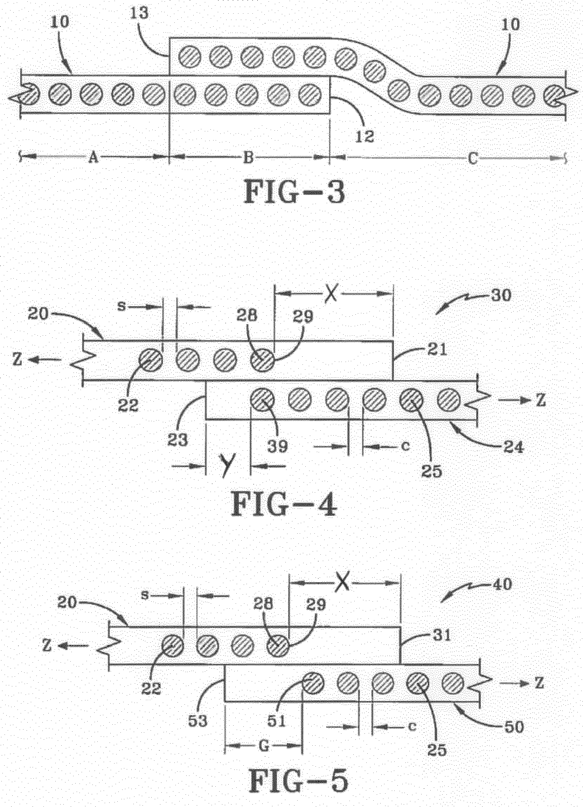

Tires typically comprise one or more layers of ply. The one or more plies are typically applied in a sheet form onto a tire building drum. The sheet of ply is wrapped about the drum, cut to the desired length and then assembled together. The cut ends of each sheet are spliced together. The ends of the ply are typically overlapped as a lap joint, as shown in Figure 3. This stock is then rolled up and taken to the tire building drum. Once built into a finished tire, the ply in regions B causes a restriction in the ply due to the added strength and stiffness of the overlapped ply cords. Regions A and C typically have excessive spreading between the cords due to their proximity to the restriction in region B. The overlap of ply material can contribute to tire high speed nonuniformity and can also cause visible depressions in the sidewall. It is known in the art to join the ply ends via a butt splice, wherein there is no overlap of material. However, forming a butt splice joint generally requires additional capital equipment in order to form the butt splice. The butt splice is also not as strong or as reliable as the lap slice.

Thus an improved method and apparatus for forming a splice that does not require an additional investment in capital equipment is described. The resulting tire provides improved uniformity.

### Summary of the Invention

The invention relates to a method of manufacturing a layer of tire ply in accordance with claim 1 and to a pneumatic tire in accordance with claim 10.

Dependent claims refer to preferred embodiments of the invention.

The invention provides in a first aspect a method of forming a layer of tire ply by providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; by providing a second strip of ply having a plurality of evenly spaced reinforcement cords having a spacing S, wherein there is a distance Y between the end of the second strip of ply and a reinforcement cord nearest the lateral end, wherein Y is not equal to S; and by joining the first and second lateral ends to form an overlapped portion, wherein only a single cord of the first strip overlaps with a single cord of the second strip.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion, wherein only a single cord of the first strip overlaps with a single cord of the second strip.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion, wherein only a single cord of the first strip overlaps with a single cord of the second strip, wherein the spacing X does not overlap with the spacing Y.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion, wherein only a single cord of the first strip overlaps with a single cord of the second strip, wherein the spacing X is greater than the spacing Y.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion, wherein there are no cords a distance X from the lateral end of the first strip to the nearest reinforcement cord.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion, wherein there are no cords a distance Y from the lateral end of the second strip to the nearest reinforcement cord.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion, wherein X is 3.5S +3D, wherein S is the cord spacing of the first ply.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is 1.5S+D.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein the X region of the lap joint has a single layer of cords.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein the Y region of the lap joint has a single layer of cords.

One or more embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein only a single cord of the first strip lateral end is in parallel alignment with a single cord of the second strip lateral end.

Other embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion forming a single layer of cords.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion forming a single layer of cords, wherein in the overlapped portion of the lap joint so there are no cords of the first lateral end that overlap with cords of the second lateral end.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion forming a single layer of cords, wherein the cords of the first strip lateral end are not in alignment with the cords of the second strip lateral end.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion forming a single layer of cords, wherein the spacing X does not overlap with the spacing Y.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is not equal to S; and joining the first and second lateral ends to form an overlapped portion forming a single layer of cords, wherein the spacing X is greater than the spacing Y.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein there are no cords or broken cords a distance X from the lateral end of the first strip to the nearest reinforcement cord.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein there are no cords or broken cords a distance Y from the lateral end of the second strip to the nearest reinforcement cord.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein X is 3.5S +3D, wherein S is the cord spacing of the first ply.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein Y is 2.5S+2D.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein a X region of the lap joint has a single layer of cords, wherein the X region is defined by the X distance of the first layer and the X distance of the second layer.

Embodiments of the present invention provide a method of forming a layer of tire ply comprising the following steps: providing a first strip of ply having a plurality of evenly spaced reinforcement cords with a spacing S, and having a lateral end, wherein there is a distance X between the end of the first strip of ply and a reinforcement cord nearest the lateral end, wherein X is not equal to S; providing a second strip of ply having a plurality of evenly spaced reinforcement cords having a spacing S, wherein there is a distance Y between the end of the second strip of ply and a reinforcement cord nearest the lateral end, wherein a Y region of the lap joint has a single layer of cords, wherein the Y region is defined by the Y distance of the first and second layer.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein the cords of the first strip's lateral end are in parallel alignment with the cords of the second strip lateral end.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein the cords of the first strip lateral end are not in alignment with the cords of the second strip lateral end.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein a cord of the first strip lateral end is located between the last two cords of the second strip lateral end.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein the last cord of the first strip lateral end is located between the last two cords of the second strip lateral end.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein the last cord of the first strip lateral end is located adjacent the spacing Y of the second strip lateral end.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein the spacing X between the last cord and strip end is in the range of 1.5 * S to 4*S.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein the spacing X between the last cord and strip end is equal to 2*S + D, wherein D is the cord diameter, and S is the cord spacing.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein the spacing Y between the last cord and strip end is equal to 2*C + D, wherein D is the cord diameter, and C is the cord spacing.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein the spacing X between the last cord and strip end is greater than 2*S + D, wherein D is the cord diameter, and S is the cord spacing.

Embodiments of the present invention provide a pneumatic radial tire comprising: a carcass ply wound around each of a pair of bead cores, wherein the carcass ply is formed from a first strip of ply and a second strip of ply, wherein the first strip of ply has a plurality of evenly spaced reinforcement cords with a spacing S, and having a lateral end, wherein the last two cords at the lateral end are spaced apart a distance X, wherein X is not equal to S; wherein the second strip of ply has a plurality of evenly spaced reinforcement cords having a spacing S, and having a lateral end, wherein the last two cords at the lateral end are spaced apart a distance Y, wherein Y is not equal to S; wherein the first and second lateral ends are joined together in a lap joint wherein the spacing X does not overlap with the spacing Y, wherein the spacing Y between the last cord and strip end is greater than 2*C + D, wherein D is the cord diameter, and C is the cord spacing.

In accordance with the invention, a tire ply is disclosed comprising first strip of ply having a plurality of evenly spaced reinforcement cords with a spacing S and having a lateral end, wherein there is a distance X between the lateral end of the first strip of ply and the reinforcement cord nearest the lateral end, wherein X is not equal to S; and a second strip of ply having a plurality of evenly spaced reinforcement cords having a spacing S', preferably the spacing S, and having a lateral end, wherein there is a distance Y between the lateral end of the second strip of ply and the reinforcement cord nearest the lateral end, wherein Y is not equal to the spacing S' or the spacing S. The first strip of ply and the second strip of ply and/or the first and second lateral ends form an overlapped portion. Only a single cord of the first strip of ply overlaps with a single cord of the second strip of ply, or the first and second lateral ends are joined such that the overlapped portion forms a single layer of cords.

### Definitions

"Axial" and "axially" means the lines or directions that are parallel to the longitudinal axis of the ply. In reference to the tire, "axial" means lines or direction parallel to the rotational axis of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Breakers" or "Tire Breakers" means the same as belt or belt structure or reinforcement belts.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the radial direction, or lines or directions perpendicular to the radial direction;

"Cord" means one of the reinforcement strands, including fibers, which are used to reinforce the plies.

"Ply" means a cord-reinforced layer of elastomer-coated, radially deployed or otherwise parallel reinforcement cords.

"Radial" and "radially" mean directions radially toward or away from the axis of rotation of the tire.

"Radial Ply Structure" means the one or more carcass plies or which at least one ply has reinforcing cords oriented at an angle of between 65º and 90º with respect to the equatorial plane of the tire.

"Radial Ply Tire" means a belted or circumferentially-restricted pneumatic tire in which the ply cords which extend from bead to bead are laid at cord angles between 65º and 90º with respect to the equatorial plane of the tire.

"Sidewall" means a portion of a tire between the tread and the bead.

"Lateral" means the outer end of the strip in the direction of the longitudinal axis of the strip.

### Brief Description of the Drawings

The invention will be described by way of example and with reference to the accompanying drawings in which:
FIG. 1 is a schematic top view of a ply fabric undergoing shearing;
FIG. 2 is a schematic of the cut ply material shown spliced together on a tire drum;
FIG. 3 is a cross-sectional view of a conventional lap splice;
FIG. 4 is a cross-sectional view of a first embodiment of a lap joint formed from two ends of a ply which are joined together;
FIG. 5 is a cross-sectional view of a second embodiment of a lap joint formed from two ends of a ply which are joined together;
FIG. 6 is a cross-sectional view of a third embodiment of a lap joint formed from two ends of a ply which are joined together; and
FIG. 7 is a cross-sectional view of a portion of a tire in the bead area.

### Detailed Description of Example Embodiments of the Invention

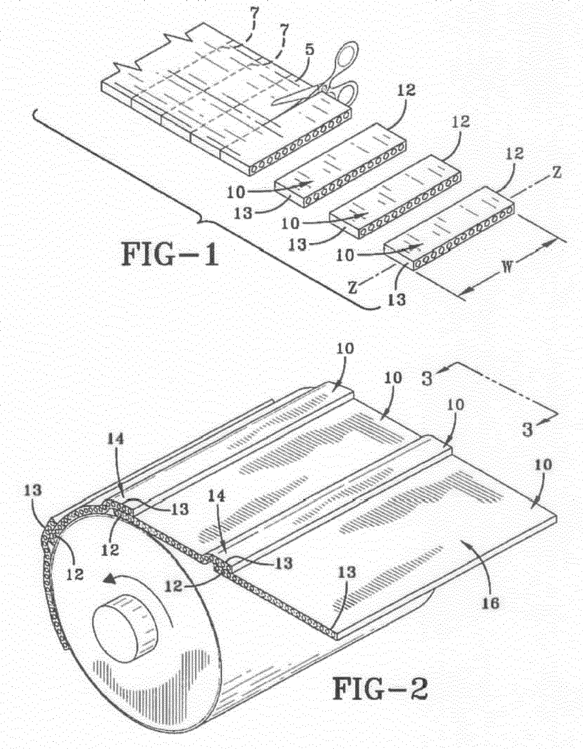

A first embodiment of the present invention is shown in Figure 4, which illustrates a lap joint 30. The inventive lap joints described herein are useful for joining together ends of reinforcement ply. As shown in Fig. 4, the lap joint is also useful for joining together the end 21 of first ply strip 20 and the end 23 of a second ply strip 24. Each ply strip 20, 24 is preferably the same as strip 10 shown in Figure 1 except as described below. The ply strips 20, 24 have a defined width W and a defined length L, wherein W and L are sized as required. Typically the length L is greater than the width W. The reinforcement cords in each strip are in parallel alignment along the length of the strip with the longitudinal axis of the strip as shown in Fig. 2. The first ply strips 20, 24 are made from the process as shown in Figure 1, wherein the lateral end 13 of a first strip is joined to the lateral end 12 of a second strip in the form of a lap joint 14, continuing the process to form a sheet of ply 16 as shown in Figure 2. The lateral ends 12, 13 are overlapped and joined together, so that the cords of each end are in parallel alignment as shown in Figure 2. The lap joint 14 may also be used to join together the lateral ends of a sheet of ply.

As shown in Figure 4, the lateral end 21 of the first ply strip 20 has a plurality of parallel cords 22 arranged along the length of the strip of the material. The cords 22 are in parallel alignment and are evenly spaced apart a distance S throughout the length of the first ply 20, except at the lateral end 21. The ply cords typically have an epi (ends per 2.54 cm) in the range of 17-35, resulting in a range of S of 0.0254 mm to 0.508 mm. At the lateral edge, the spacing X as shown between the outer edge 29 of the last cord 28 and the end 21 of the ply strip 20 is preferably 3.5S + 3D, wherein S is the cord spacing, and D is the cord diameter. However, X may be for instance from 1.5S +D, 2.5S+2D, 3.5S+3D, or 4.5S +4D.

The second ply strip 24 has a plurality of parallel aligned cords 25 arranged transverse to the length of the sheet of the material. The cords 25 are evenly spaced apart a distance C through the length of the second ply, except at the lateral end 23. At the lateral end 23, the spacing Y between the edge of the last cord and the lateral end 23 is a distance Y. Y may be .50, 1.5C +D, to 2.5C +2D, 3.5C+3D, or 4.5S+4D, wherein D is the cord diameter and C is the cord spacing. As shown in Figure 4, the spacing X is not in parallel alignment with the spacing Y, and the spacing X does not overlap with the spacing Y. As shown in Figure 4, only a single cord 28 of the first ply strip 20 overlaps in the Z direction and is in parallel alignment with a single cord 39 of ply strip 24. In the spacing X and Y, there is no cord present, and there is no partial cord or broken cord present. It is preferred that X is not equal to Y, and that X is greater than Y. It is preferred that cord spacing C of the second ply strip equals cord spacing S of the first ply strip. It is preferred that strip 20 with spacing X is in full contact with inner liner on drum

Figure 5 illustrates a second embodiment 40 of a ply lap joint. The first ply strip 20 is the same as Figure 4. The second ply strip 50 is different than the ply strip 24 of Figure 4 as follows. The last cord 51 is spaced an interval G from the strip end 53. As shown in Figure 5, the spacing X partially overlaps with the spacing G in the Z direction. Preferably the distance in the Z direction between cord edge 29 of cord 28 and cord edge 54 of cord 51 is in the range of 0.5S to S. As shown in Figure 5, none of the cords of the first ply strip 20 overlap in the Z direction with cords 25 of the second ply strip 50. In the spacing X and G, there is no cord present, and there is no partial cord or broken cord present. It is preferred that X is not equal to G, and that X is greater than G. It is preferred that cord spacing C of the second ply strip equals cord spacing S of the first ply strip. It is preferred that strip 20 with spacing X is in full contact with inner liner on drum.

At the lateral edge of strip 20, the spacing X as shown between the outer edge 29 of the last cord 28 and the end 21 of the ply strip 20 is 3.5S + 3D, wherein S is the cord spacing, and D is the cord diameter. However, X may be 1.5S +D, 2.5S+2D, 3.5S+3D, or 4.5S +4D. At the lateral edge of the second strip 50, the spacing G as shown between the outer edge 54 of the last cord 51 and the end 53 of the ply strip 50 is 2.5C + 2D, wherein C is the cord spacing, and D is the cord diameter. However, G may for instance also be 1.5S +D, 2.5S+2D, or 3.5S+3D. In the embodiment shown, due to the location of the X and G spacing, there is no double layer of cords in the lap joint.

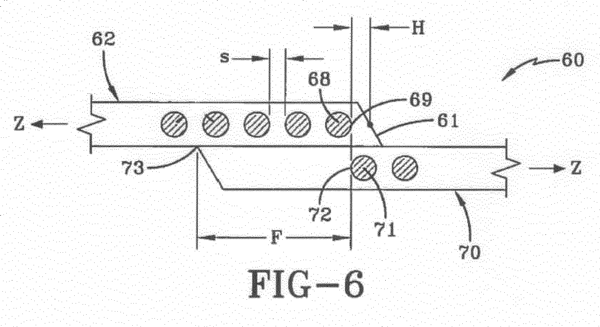

Figure 6 illustrates a third embodiment 60 with a slight overlap of the H and F spacing in the transverse direction. None of the cords in the first strip 62 overlap with the cords in the second strip 70 in the Z direction so that there is no double layer of cords in the lap joint. At the lateral edge of strip 62, the spacing H as shown between the outer edge 69 of the last cord 68 and the end 61 of the ply strip 62 is .5S, wherein S is the cord spacing. However, H may range from .25S to S. At the lateral edge of the second strip 70, the spacing F as shown between the outer edge 72 of the last cord 71 and the outermost end 73 of the ply strip 70 is 3.5C + 4D, wherein C is the cord spacing, and D is the cord diameter. In the embodiment shown, due to the location of the H and F spacing, there is no overlap of cords in the Z direction, and thus no double layer of cords in the lap joint. It is preferred that the strip ends 61,73 are angled as shown. It is preferred that strip 70 is in full contact with drum.

The resulting lap joints described above have the strength of the prior art lap joint but without the disadvantage of the overlap of two functional cords.

All of the lap joints described above overlap a distance B as shown in Figure 3. The distance B is typically 1-6 mm.

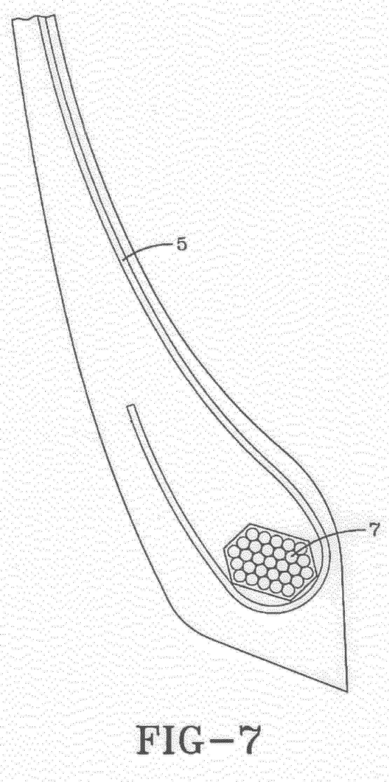

Figure 7 illustrates a tire that has a layer of ply 5 wrapped around a bead 7. The ply is formed from a plurality of ply strips lap spliced together as shown in Figures 1-2 formed with a lap joints of any of the inventions described herein. The reinforcement cords are oriented in the radial direction of the tire. When the lap joint of Figures 4 through 7 are used, the overlap splice of the reinforcement cords align with the circumferential direction, transverse to the radial direction. The spacing X, Y, F,G, H, M likewise align in the transverse (circumferential) direction, perpendicular to the radial direction.

## Claims

1. A method of forming a layer of tire ply (5), the method comprising the steps:
a) providing a first strip of ply (20) having a plurality of evenly spaced reinforcement cords (22) with a spacing S and having a lateral end (21), wherein there is a distance X between the lateral end (21) of the first strip of ply (20) and the reinforcement cord (28) nearest the lateral end (21), wherein X is not equal to S;
b) providing a second strip of ply (24) having a plurality of evenly spaced reinforcement cords (25) having a spacing S', preferably the spacing S, and having a lateral end (23), wherein there is a distance Y between the lateral end (23) of the second strip of ply (24) and the reinforcement cord (39) nearest the lateral end (23), wherein Y is not equal to the spacing S' or the spacing S; and
c) joining the first strip of ply (20) and the second strip of ply (24) and/or the first and second lateral ends (21, 23) to form an overlapped portion, wherein only a single cord (28) of the first strip of ply (20) overlaps with a single cord (39) of the second strip of ply (24); or joining the first and second lateral ends (21, 23) to form an overlapped portion forming a single layer of cords.

2. The method of claim 1 wherein the spacing X does not overlap with the spacing Y and/or wherein the spacing X is greater than the spacing Y.

3. The method of claim 1 or 2 wherein there are no cords the distance X from the lateral end (21) of the first strip of ply (20) to the nearest reinforcement cord (28) of said first strip of ply (20) and/or wherein there are no cords the distance Y from the lateral end (23) of the second strip of ply (24) to the nearest reinforcement cord (39) of said second strip of ply (24).

4. The method of at least one of the previous claims wherein X is 3.5S + 3D or is in a range of from 2.5S + 3D to 4.5S+3D, wherein S is the cord spacing of the first strip of ply (20) and D is the cord diameter of the reinforcement cords (22) in said first strip of ply (20).

5. The method of at least one of the previous claims wherein Y is 1.5S' + D' or is in a range of from 0.5S' + D' to 2.5S' + D', wherein S' is the cord spacing of the second strip of ply (20) and D' is the cord diameter of the reinforcement cords (28) in said second strip of ply (24).

6. The method of at least one of the previous claims wherein the region of the lap joint along the distance X has only a single layer of cords (25) and/or wherein the region of the lap joint along the distance Y has only a single layer of cords (22).

7. The method of at least one of the previous claims wherein only a single cord (28) of the first strip of ply (20) lateral end is in parallel alignment with a single cord (39) of the second strip of ply (24) lateral end.

8. The method of at least one of the previous claims wherein in the overlapped portion of the lap joint there are no cords of the lateral end (21) of the first strip of ply (20) that overlap with cords of the lateral (23) end of the second strip of ply (24).

9. The method of at least one of the previous claims wherein the cords (22) of the lateral end (21) of the first strip of ply (20) are not in alignment with the cords (25) of the lateral end (23) of the second strip of ply (24).

10. A pneumatic radial tire comprising a carcass ply (5), wherein the carcass ply is preferably wound about a pair of bead cores (7), wherein the carcass ply (5) is formed from a first strip of ply (20) and a second strip of ply (24), wherein the first strip of ply (20) has a plurality of evenly spaced reinforcement cords (22) with a spacing S and a lateral end (21), wherein the last two cords (22) at the lateral end (21) are spaced apart a distance X, wherein X is not equal to S; wherein the second strip of ply (24) has a plurality of evenly spaced reinforcement cords (25) having a spacing S', preferably the spacing S, and has a lateral end (23), wherein the last two cords at the lateral end (23) are spaced apart a distance Y, wherein Y is not equal to S'; and wherein the first and second lateral ends (21, 23) are joined together in a lap joint wherein the distance X does not overlap with the distance Y.

11. The pneumatic radial tire of claim 10 wherein a cord (22), preferably the last cord, of the first strip of ply (20) lateral end (21) is located between the last two cords of the second strip of ply (24) lateral end (23).

12. The pneumatic radial tire claim 10 wherein the last cord of the first strip of ply (20) lateral end (21) is located adjacent the distance Y of the second strip of ply (24) lateral end (23).

13. The pneumatic radial tire of at least one of the claims 10 to 12 wherein the distance X between the last cord and the lateral end (21) of the first strip of ply (20) is in the range of from 1.5 * S to 4*S.

14. The pneumatic radial tire of at least one of the claims 10 to 13 wherein the distance X between the last cord and the end of the first strip of ply (20) is equal to 2*S + D, wherein D is the cord diameter and S is the cord spacing; and/or wherein the distance Y between the last cord and the end of the second strip of ply (24) is equal to 2*C + D, wherein D is the cord diameter, and C is the cord spacing.

15. The pneumatic radial tire of at least one of the claims 10 to 14 wherein the distance X between the last cord and the end of the first strip of ply (20) is greater than 2*S + D, wherein D is the cord diameter and S is the cord spacing; and/or wherein the distance Y between the last cord and the end of the second strip of ply (24) is greater than 2*C + D, wherein D is the cord diameter and C is the cord spacing.
